Europäisches Patentamt

European Patent Office

Office européen des brevets

(11) Veröffentlichungsnummer: **0 289 983 B1**

(12) **EUROPÄISCHE PATENTSCHRIFT**

(45) Veröffentlichungstag der Patentschrift: **11.11.92**

(21) Anmeldenummer: **88107045.2**

(22) Anmeldetag: **03.05.88**

(51) Int. Cl.⁵: **G01B 21/04**, G01B 5/00, G01B 21/00

(54) Flexible CNC-Vielstellenmesseinrichtung.

(30) Priorität: **05.05.87 DE 3714862**

(43) Veröffentlichungstag der Anmeldung:
**09.11.88 Patentblatt 88/45**

(45) Bekanntmachung des Hinweises auf die
Patenterteilung:
**11.11.92 Patentblatt 92/46**

(84) Benannte Vertragsstaaten:
**CH DE FR GB IT LI SE**

(56) Entgegenhaltungen:
**DE-A- 3 208 412**

**ZWF ZEITSCHRIFT FÜR WIRTSCHAFTLICHE
FERTIGUNG, Band 80, Nr. 11, November 1985,
Seiten 477-479, München, DE; K.-H. Breyer et
al.: "Datenverbund zwischen
CAD/CAM-Anlagen und Koordinatenmessgeräten"**

(73) Patentinhaber: **Mauser-Werke Oberndorf
GmbH
Teckstrasse 11
W-7238 Oberndorf(DE)**

(72) Erfinder: **Die Erfinder haben auf ihre Nennung verzichtet**

(74) Vertreter: **Hofmann, Gerhard, Dipl.-Ing. Patentassessor et al
Stephanstrasse 49
W-8500 Nürnberg 30(DE)**

## Beschreibung

Die Erfindung betrifft eine flexible CNC-Vielstellenmeßeinrichtung nach dem Oberbegriff des Patentanspruches 1.

An die Fertigungsmeßtechnik werden ständig höhere Anforderungen gestellt, die sich aus dem Einsatz von neuen Fertigungsverfahren und flexiblen Fertigungssystemen, der veränderten Fertigungsstrukturen und Fertigungsabläufe und der weitgehenden Automatisierung durch den Einsatz neuer Informationstechnologien ergeben. Ferner sind auch die konstruktiven Anforderungen an die Mikro- und Makrogestalt von Werkstücken zu berücksichtigen. Zu der wichtigsten Aufgabe der Fertigungstechnik gehörtdas Erfassen von geometrischen Merkmalen von Werkstücken (die Werkstückgestaltprüfung). Innerhalb dieses Gebietes sind für die Einsetzbarkeit von Fertigungsmeßgeräten für bestimmte Meßaufgaben immer mehrere Kriteren entscheidend.

Die Einsatzorte von Fertigungsmeßgeräten innerhalb eines Fertigungsbetriebes erstrecken sich auf den Wareneingang, auf Fertigungsinseln für das Bereitstellen von Korrekturwerten für Bearbeitungsmaschinen zum Zweck der Fertigungsprozeßregelung, Qualitätskontrolle, Montage und Endkontrolle des Gesamtproduktes. In all diesen Bereichen kommen heute gestaltprüfende Meßmittel zum Einsatz. Der Schwerpunkt der Fertigungsneßtechnik im Produktionsprozeß, der bislang in der absolut genauen und extrem universellen geometrischen Gesamtprüfung von Werkstücken unter günstigen Bedingungen im Meßraum lag, wird künftig direkt in den Fertigungsbereich verschoben.

Dort müssen dann unter Fertigungsbedingungen in bezug auf die Meßzeit, die Anzahl und Vorbildung des Meßpersonals und die Umgebungsbedingungen vergleichbare Genauigkeiten wie im Meßraum ermöglicht werden, wobei durchaus eine Einschränkung der Flexibilität in Kauf genommen werden kann.

Zur Realisierung dieser Anforderungen besteht die Möglichkeit, einerseits die Weiterentwicklung herkömmlicher Fertigungsmeßgeräte unter weitgehender Beibehaltung grundlegender meßtechnischer Eigenschaften dieser Geräte zu betreiben oder anderseits die Entwicklung eines neuartigen Fertigungsmeßgerätes durchzuführen, welches die vorteilbringenden Komponenten herkömmlicher Fertigungsmeßgeräte in sich vereinigt.

Die DE-A-32 08 412 offenbart ein Dimensionsmeßsystem mit einer Mehrzahl von Betätigungsarmen, die von einem Computersystem gesteuert werden. Dabei ist ein Grundrahmen mit selbständigen Meßeinrichtungen vorgesehen, in dem Einzelelemente integriert sind. Damit ein solches System flexibel und modular aufgebaut ist und die Aufgabe erfüllt, bei unterschiedlichen Bedingungen benutzbar zu sein, bewirkt das Computersystem die gleichzeitige Steuerung und Überwachung der Mehrzahl der Betätigungsarme, denen jeweils eine Stützstruktur zugeordnet ist.

Ausgehend von dem bekannten Stand der Technik und den Anforderungen an die zukünftige Fertigungsmeßtechnik ist es Aufgabe der Erfindung, eine flexible CNC-Vielstellenmeßeinrichtung zu schaffen, die es erlaubt, für die immer größer werdenden Produktvarianten bei kleineren Stückzahlen mit steigenden Qualitätsanforderungen die fortlaufende Produktion zu sichern, dazu ein schnelles Messen mit geringer Meßunsicherheit zu ermöglichen und vielfältige Meßaufgabenlösungen, wie z. B. die Längenmessung, die Oberflächenmessung und die Formprüfung, anzubieten.

Diese Aufgabe wird durch die technischen Merkmale im Kennzeichenteil des Patentanspruches 1 gelöst. Ausgestaltungen und Weiterbildungen des Lösungsgedankens nach Patentanspruch 1 sind den abhängigen Patentansprüchen 2 bis 10 zu entnehmen.

Die technischen Merkmale bieten die Vorteile, daß durch Kombination von Komponenten aus der Koordinatenmeßtechnik mit Elementen der Vielstellenmeßtechnik und der Formprüftechnik eine Verknüpfung dieser konträr erscheinenden Meßphilosophien in einem Gerät durchgeführt und damit die vorhandene meßtechnische Lücke zwischen der Koordinatenmeßtechnik als flexible Methode zur universellen Gesamtprüfung aller an beliebigen Werkstücken vorgegebenen Meßaufgaben und der Vielstellenmeßtechnik als zuverlässige Methode zur schnellen Rückführung ausgewählter und fertigungsrelevanter Werkstückmerkmale geschlossen werden kann.

Diese Synthese sichert sowohl eine hohe Meßgenauigkeit bei Absolutmessungen als auch Schnelligkeit und Reproduzierbarkeit bei der Prüfung bestimmter Gestaltmerkmale. Der Ausgangspunkt für die Konzeption dieses Fertigungsmeßsystems kann gebildet werden einerseits von dem Grundprinzip der Koordinatenmeßtechnik und andererseits von dem Grundprinzip der bekannten Vielstellenmeßtechnik. In einem von der Koordinatenmeßtechnik her bekannten stabilen Gerätegrundaufbau mit mehreren selbständigen Meßeinrichtungen oder auch Modulen werden Elemente der Vielstellenmeßtechnik, bspw. in Bezug auf Zeichnungsdaten am Meisterstück voreingestellte Mehrfachtaster und automatisierte Prüflehren, integriert. Die Meßwerterfassung und die Meßwertauswertung können durch entsprechende Erweiterung der aus der Koordinatenmeßtechnik übernommenen Meßsoftware sowohl auf dem üblichen koordinatenmeßtechnischen Weg als auch nach Art der Vielstellenmeßtechnik durch direkten Soll-Ist-Vergleich bestimmter Meßtasterstellungen erfolgen. Das bedeutet, daß die Meßtaster, ausgehend von den zeichnerisch vorgegebenen Daten, an einem ausgewählten Werkstück voreingestellt bzw. kalibriert werden. Die so fest eingestellten Meßtaster fahren nun bei allen weiteren Werkstücken mit großer Geschwindigkeit an die Meßpunkte und stellen in einem Soll-Ist-Vergleich die Meßdaten reproduzierbar fest.

Die wesentlichen Eigenschaften und Vorzüge dieser neuen Vielstellenmeßeinrichtung sind die fünf voneinander unabhängigen Meßeinrichtungen, welche im wesentlichen aus einer Brücke mit senkrechter Pinole und vier Horizontalauslegern mit jeweils waagerechter Pinole bestehen. Dabei ist jede Verfahrachse mit einem eigenen Längenmeßsystem zur Erhöhung der Genauigkeit und einer Ausgleichseinrichtung für die Massenkräfte ausgerüstet, die beim Beschleunigen auftreten.

Das Werkstück kann bei dieser Einrichtung von fünf verschiedenen Seiten gleichzeitig gemessen werden, ohne daß dazu komplizierte Tasterkombinationen erforderlich sind. Ferner sind kombinierte Rund-und Planlaufmessungen gleichzeitig in fünf verschiedenen Meßlinien möglich und für Formprüfungen an Wellen kann die Brückenpinole als Gegenhalter verwendet werden. Die Vielstellenmeßeinrichtung kann mit dem üblicherweise geforderten Meßbereich, bspw. 1000 mm x 1000 mm x 1200 mm hergestellt werden. Die voneinander unabhängigen Meßeinrichtungen sind Module, worunter Drei-Achs-Meßeinheiten als komplette Baueinheiten verstanden werden.

Durch die laufende Kollisionskontrolle ist eine gegenseitige Behinderung der Pinolen ausgeschlossen. Eine als Koordinatenmeßgerät ausgelegte Baugruppe ist als flexibler Einstellmeister für die übrigen vielstellenmeßtechnisch eingesetzten Baugruppen zu verwenden, wodurch ein verkörperter Einstellmeister entfällt. Es ist eine gemeinsame Kalibrierung aller Meßeinrichtungen an einem zentral angeordneten Prüfkörper mit einer Umschlagmessung durchführbar. Ferner ist eine gemeinsame Bezugspunktbestimmung, nämlich der Nullpunkt des Bezugskoordinatensystems, durch Messung an einem zentral angebrachten versenkbaren Kugel-Normal möglich.

Durch den Einsatz mehrerer voneinander unabhängiger Meßsysteme ist eine hohe Meßpunktrate bei einer gleichzeitigen Werkstückantastung aus fünf verschiedenen Richtungen möglich. Die Meßeinrichtung kann aus standardisierten Modulen zusammengesetzt und den jeweiligen Erfordernissen mit geringem Aufwand angepaßt werden, wodurch eine Flexibilität bezüglich der Anordnung und Größe der Meßachsen erzielt wird. Durch den Modulaufbau ist eine relativ schnelle Reparaturmöglichkeit durch einfachen Modulaustausch gegeben. Durch den Einsatz mehrerer Meßeinrichtungen, z.B.

zur Form-, Lage- und Rauheitsprüfung in den verschiedenen Meßarmen kann das gesamte System in Verbindung mit dem Drehtisch quasi als Rundtakt-Meßeinrichtung eingesetzt werden.

Zusammenfassend können die Hauptmerkmale der erfindungsgemäßen Vielstellenmeßeinrichtung wie folgt genannt werden:

- hohe Flexibilität bei der Konfiguration
- auf eine Werkstückteilefamilie begrenzte Flexibilität einer gewählten Konfiguration
- vielfältige Kombinationsmöglichkeiten zwischen koordinaten- und vielstellen-meßtechnischen Anwendungen
- Fortfall eines Einstellmeisters zur Kalibrierung bei vielstellen-meßtechnischen Anwendungen
- vollständige Automatisierung sämtlicher Gerätefunktionen
- modularer Aufbau durch standardisierte Baugruppen
- vollständige Integration in den Fertigungsfluß
- informationstechnische Verkettung im CAD/CAM/CAQ-Datenverbund
- hohe Zuverlässigkeit und kurze Meßzeiten sowie schnelle Rückführung von Qualitätsdaten in die Fertigung
- fertigungsorientierte Prüfaussagen für die Qualitätsregelung innerhalb der Fertigungsinsel
- gute Reproduzierbarkeit
- hohe absolute Genauigkeit der koordinatenmeßtechnischen Anwendungen
- Anwendung beliebiger Tastsysteme **und**
- großer Meßbereich von etwa 1000 mm x 1000 mm x 1200 mm.

In den Zeichnungen sind Beispiele der Erfindung dargestellt, die anhand der folgenden Zeichnungsbeschreibung näher erläutert werden. In den Zeichnungen zeigen:

Fig. 1     eine Vielstellenmeßeinrichtung in einer Blockbilddarstellung;

Fig. 2     Hardwarekomponenten für die CNC-Vielstellenmeßeinrichtung im Blockschaltbild;

Fig. 3     einen Ablaufplan für die Auswertung von Meßpunkten mit Auswertesoftware der Vielstellenmeßeinrichtung;

Fig. 4     ein Blockschaltbild einer Ausleger- oder Brückenbaugruppe der Vielstellenmeßeinrichtung;

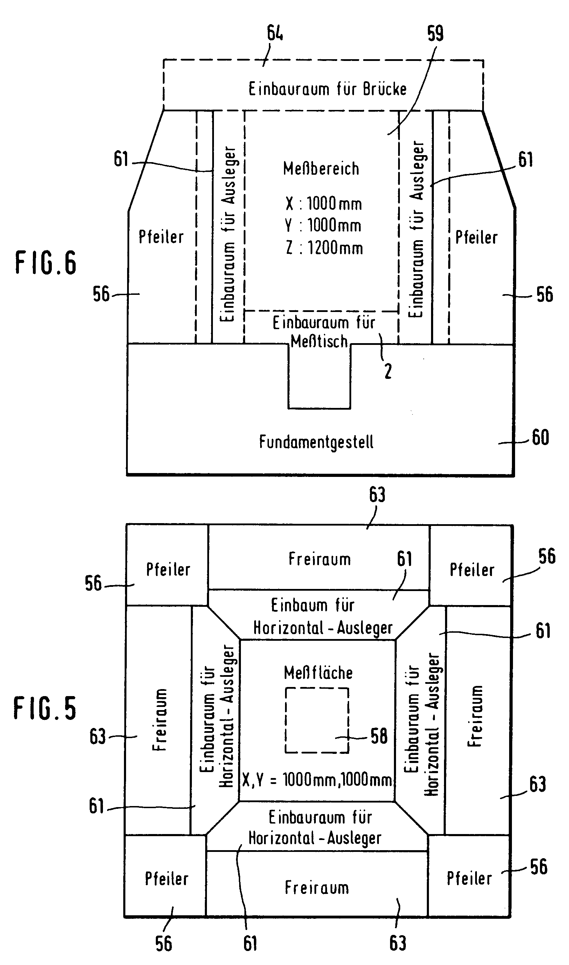

Fig. 5     ein Grundgestell der Vielstellenmeßeinrichtung mit Einbauräumen für die Meßgeräte in schematischer Draufsicht;

Fig. 6     das Grundgestell nach Fig. 5 in einer schematischen Vorderansicht;

Fig. 7     den prinzipiellen Aufbau des Vielstellenmeßsystems mit den Systemkomponenten in schematischer Darstellung;

Fig. 8 ein kinematisches Modell der Vielstellenmeßeinrichtung in perspektivischer Ansicht;

Fig. 9 die Vielstellenmeßeinrichtung nach Fig. 8 in perspektivischer Ansicht mit dem Grundrahmen und entsprechenden Meßeinrichtungen.

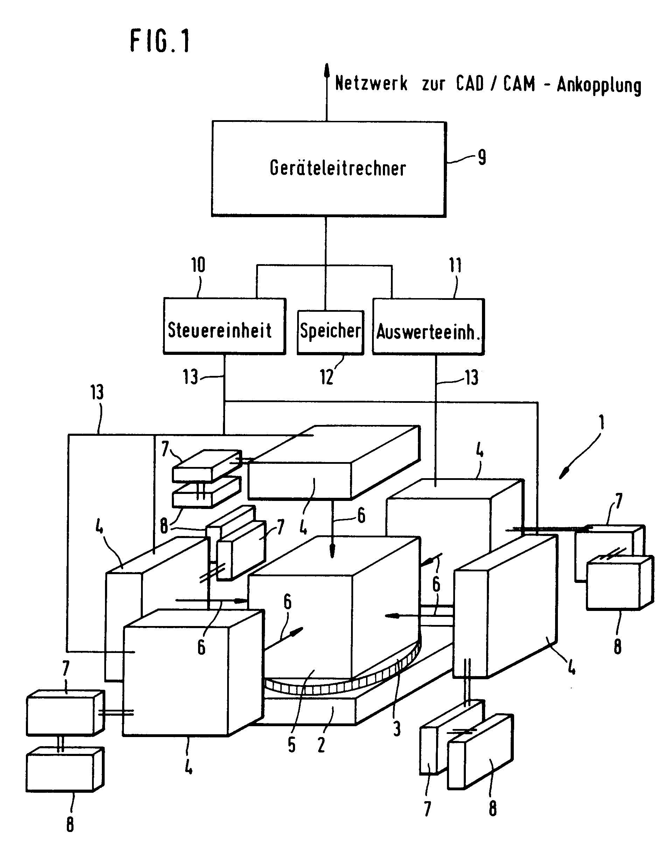

Die Vielstellenmeßeinrichtung 1 besteht gemäß dem Prinzipaufbau in Fig. 1 aus einem zentral angeordneten Meßtisch 2, welcher im dargestellten Beispiel einen integrierten Drehtisch 3 aufnimmt, und den von fünf Seiten um den zentralen Meßtisch 2 angeordneten Meßeinrichtungen 4. Die Meßeinrichtungen können in beliebiger Auswahl sowohl Komponenten aus der Koordinatenmeßtechnik als auch Elemente der Vielstellenmeßtechnik und der Formprüftechnik darstellen. Die voneinander unabhängig arbeitenden Meßeinrichtungen 4 sind sowohl seitlich als auch oberhalb des zentral angeordneten Werkstücks 5 angeordnet und weisen auf das Werkstück 5 gerichtete einfache Meßtaster 6 auf.

Durch die Kombination mit dem integrierten Drehtisch 3 kann eine Aufteilung der vorliegenden Meßaufgaben auf verschiedene, auf bestimmte Meßaufgaben spezialisierte und seitlich des Werkstückes angeordnete Meßeinrichtungen 4 erfolgen. Diese Meßeinrichtungen können in der Einrichtung zum Ermitteln der Werkstücklage, der Einrichtung zur Lageprüfung, der Einrichtung zur Formprüfung und der Einrichtung zur Rauheitmessung bestehen. Die Meßeinrichtungen 4 sind mit Wechseleinrichtungen 7 für die Meßtaster 6 und die Meßköpfe für alle Meßachsen ausgerüstet. An diese Wechseleinrichtungen 7 sind Magazine 8 für die Bereitstellung der Meßtaster und Meßköpfe angeschlossen. Dieser Vielstellenmeßeinrichtung 1 ist ein Geräteleitrechner 9 zugeordnet, welcher aus einer Steuereinheit 10, einer Auswerteeinheit 11 und einem Speicher 12 gebildet ist. Die Meßeinrichtungen sind über entsprechende Leitungen 13 mit dem Geräteleitrechner 9 elektrisch verbunden.

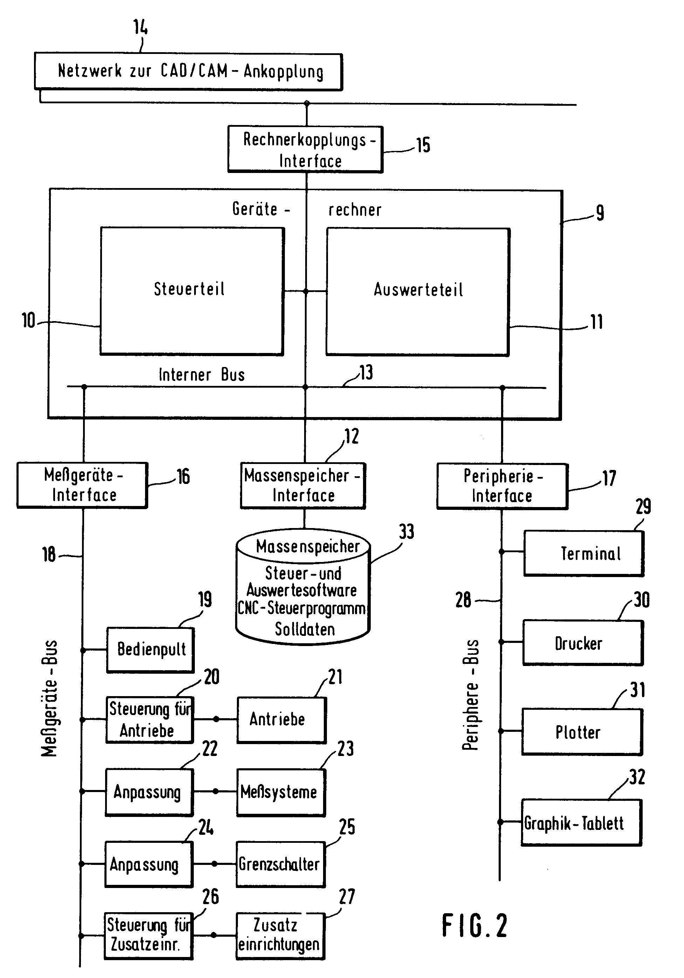

Wie insbesondere Fig. 2 zeigt, ist der Geräteleitrechner 9 mit der integrierten Steuereinheit 10 und Auswerteeinheit 11 sowie dem Massespeicher 12 an ein Netzwerk 14 zur CAD/CAM-Ankopplung über ein entsprechendes Rechnerkopplungs-Interface 15 verbunden. Der Geräteleitrechner 9 ist außerdem noch über Busleitungen 13 sowohl mit dem Meßgeräte-Interface 16 und dem Peripherie-Interface 17 verbunden. Die Meßgerätebusleitung 18 schließt an das Meßgeräte-Interface 16 das Bedienpult 19, die Steuerung für Antriebe 20 mit den Antrieben 21, die Anpassung 22 für die Meßsysteme 23, die Anpassung 24 für den Grenzschalter 25 sowie die Steuerung für Zusatzeinrichtungen 26 mit den Zusatzeinrichtungen 27 an. Eine Peripherie-Busleitung 28 kann ein Terminal 29, einen Drucker 30, einen Plotter 31 und ein Graphiktablett 32 mit dem Peripherie-Interface 17 verbinden. Das Massespeicher-Interface 12 stellt die Verbindung zu dem eigentlichen Massespeicher 33 für die Steuer- und Auswertesoftware, für das CNC-Steuerprogramm und für die Soll-Daten her.

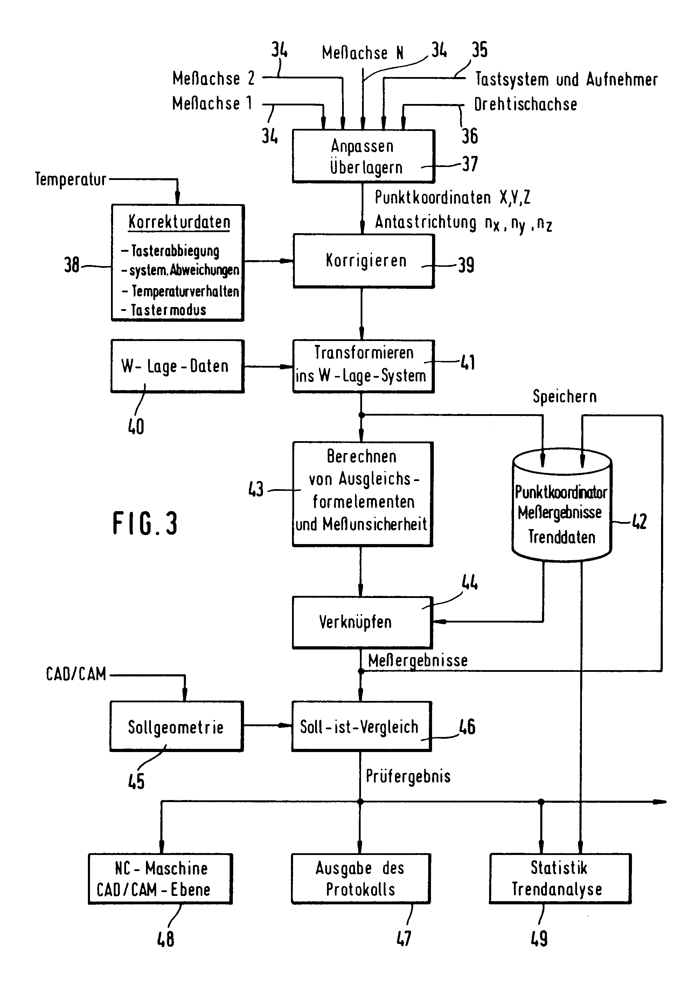

Aus Fig. 3 geht der im wesentlichen aus der Koordinatenmeßtechnik bekannte Ablaufplan für die Auswertung von Meßpunkten mit der Auswertesoftware hervor. Die Meßachsen 34, das Tastsystem und die Aufnehmer 36 sowie die Drehtischachse 36 werden im Block 37 zusammengefaßt, angepaßt und überlagert. Die ermittelten Punktkoordinaten X, Y und Z sowie die entsprechenden Antastrichtungen für X, Y und Z werden weitergeleitet und anhand von Temperaturkorrekturdaten 38 im Block 39 korrigiert. Nach gleichzeitiger Ermittlung der Werkzeuglagedaten 40 werden die so korrigierten Koordinaten- und Antastrichtungen in das Werkzeuglagesystem 14 transformiert. Die Punktkoordinaten, Meßergebnisse und Trenddaten werden in einem parallelen Speicher 42 abgelegt, während die transformierten Punktkoordinaten und Antastrichtungen außerdem parallel zur Berechnung von Ausgleichsformelementen und der Meßunsicherheit in das System 43 geleitet werden. Anschließend erfolgt die Verknüpfung mit der Ausgabe des Meßergebnisses, welches im Speicher 42 abgelegt wird. Durch Hereingabe der Sollgeometrie aus dem CAD/CAM-System findet der Soll-Ist-Vergleich 46 statt, dessen Prüfergebnis an das Ausgabemodul 47 des Protokolls, an die NC-Maschine und CAD/CAM-Ebene 48 sowie an das Statistikmodul 49 weitergegeben wird. In das Statistikmodul werden zusätzlich auch die Trenddaten aus dem Speicher 42 eingeleitet.

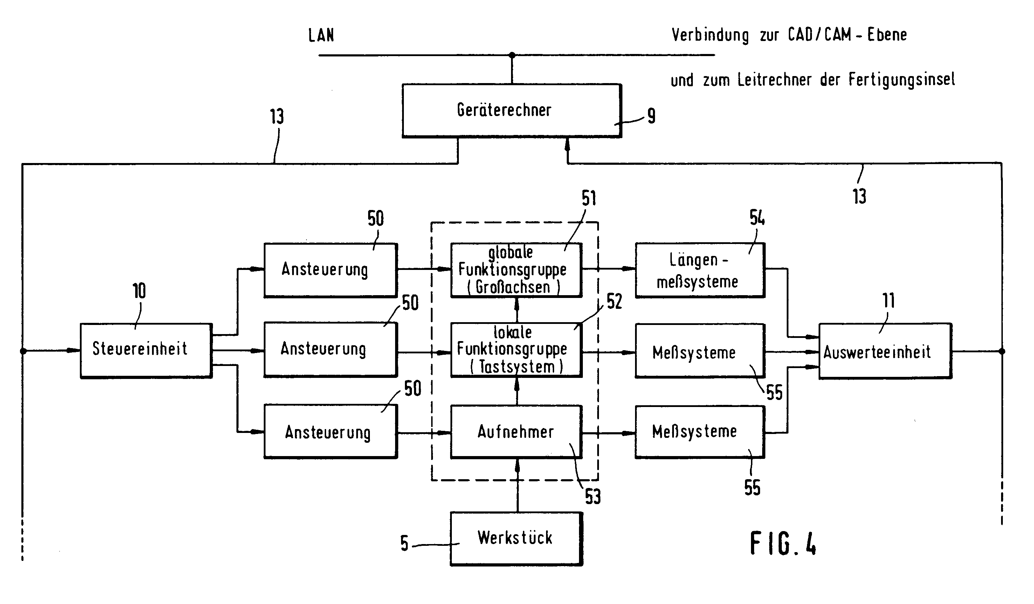

Das Blockschaltbild nach Fig. 4 zeigt die Ausleger- und Brückenbaugruppe in der Verbindung zum Geräteleitrechner 9. Von der Steuereinheit 10 wird über die Blöcke 50 die Ansteuerung einmal der Großachsen 51, der Tastsysteme 52 und der Aufnehmer 53 vorgenommen. Dabei stehen die Aufnehmer 53 in Funktionsverbindung mit dem Werkstück 5. Die ermittelten Werte von den Großachsen werden über ein Längenmeßsystem 54 der Auswerteeinheit 11 zugeleitet, während entsprechende Meßsysteme 55 die ermittelten Werte aus den Tastsystemen und aus dem Aufnehmer ebenfalls der Auswerteeinheit 11 zuleiten. Die Auswerteergebnisse werden von der Auswerteeinheit 11 über die Leitung 13 wieder dem Geräteleitrechner 9 zur Verfügung gestellt und dort verarbeitet. Als Längenmeßsysteme können Laserinterferometer oder auch optische Längenmeßsysteme eingesetzt sein.

Der Meßgeräteaufbau der Vielstellenmeßeinrichtung 1 kann in einfacher Bauweise so vorgenommen sein, daß vier Säulen 56 in gleichmäßigem Abstand zueinander im Viereck angeordnet sind. Zentral zwischen den vier Säulen 56 befindet sich der Meßtisch 57 mit der Meßfläche 58 und dem Meßbereich 59. Mit 60 ist das Fundamentgestell bezeichnet. An den vier Seiten zum Meßtisch 57 ist jeweils ein Einbauraum 61 für Horizontalausleger 62 vorgesehen, während jeweils zwischen den Pfeilern 56 ein weiterer Freiraum 63 eingerichtet ist, um die Vielstellenmeßeinrichtung bspw. mit Werkstücken beladen zu können und um eine verbesserte Zugänglichkeit zu erzielen. Der Freiraum 63 ist außerdem notwendig, damit die Auslegerarme der Meßeinrichtung störungsfrei bewegt werden können. Über den Pfeilern 56 befindet sich schließlich noch der Einbauraum 64 für die Brücke 65.

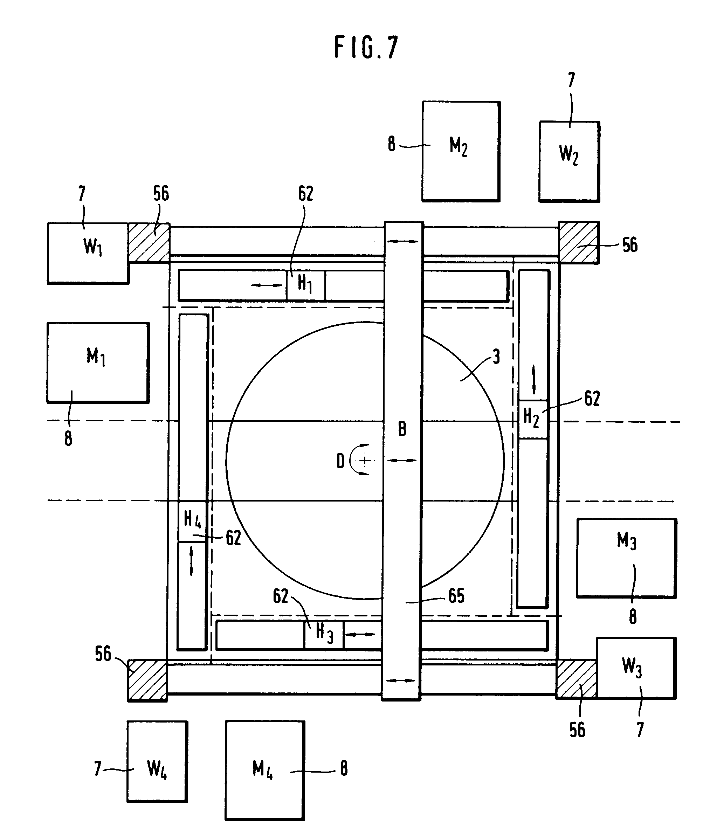

Wie dazu die Fig. 7 zeigt, ist der Meßtisch 2 als Drehtisch 3 mit einer Winkelmeßeinrichtung ausgeführt.

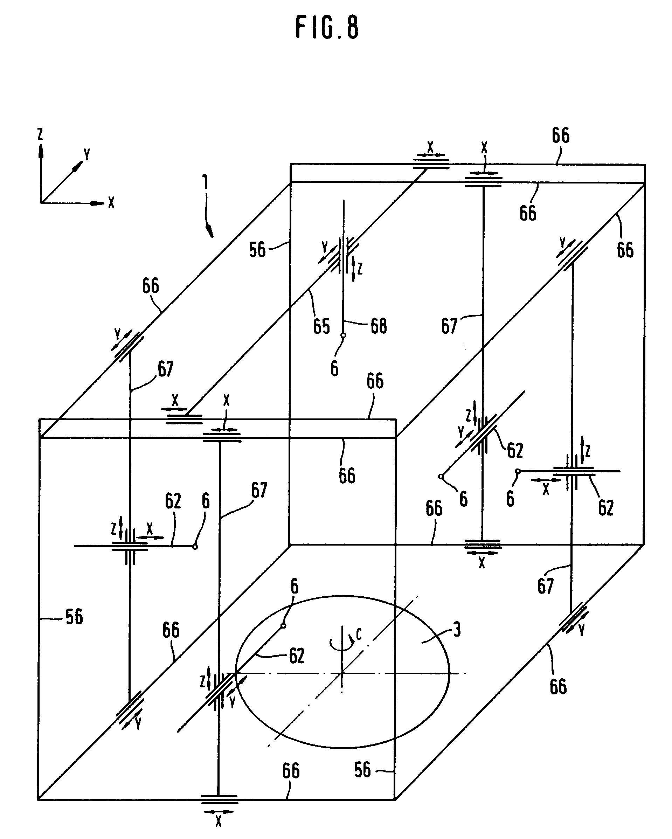

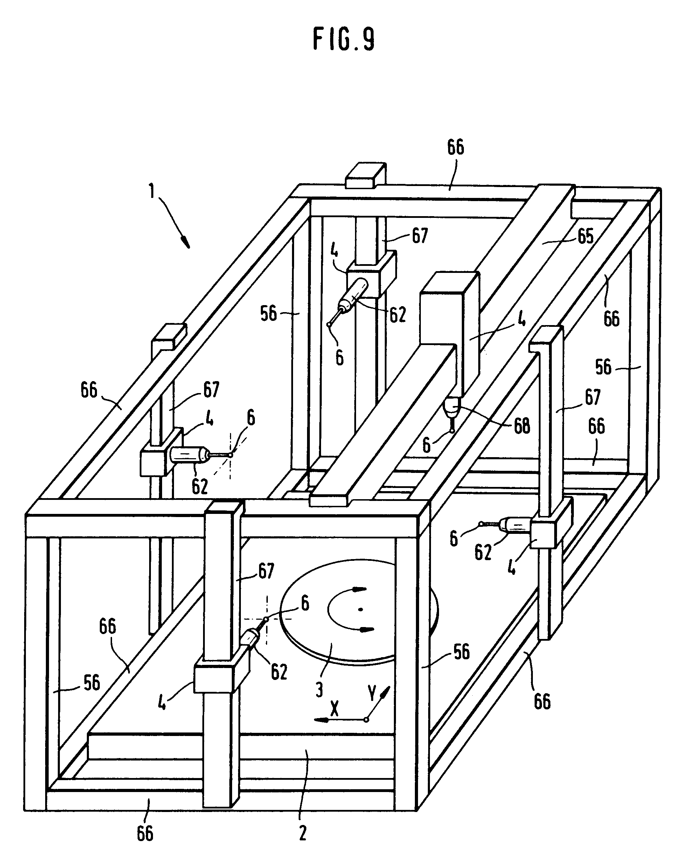

Fig. 8 zeigt ein kinematisches Modell der Vielstellenmeßeinrichtung 1 welches in Fig. 9 als Geräteeinheit dargestellt ist. Ausgehend von den im Rechteck stehenden Ecksäulen 56, die um den zentral angeordneten Drehtisch 3 mit Winkelmeßeinrichtung angeordnet sind, besteht die Vielstellenmeßeinrichtung aus insgesamt elf Horizontalverfahrachsen 66 zu denen auch die Brücke 65 gehört. Ferner sind vier Vertikalverfahrachsen 67 und vier Horizontalausleger 62 und eine Vertikalpinole 68 vorhanden. Sämtliche Verfahrachsen sind mit integrierten Längenmeßsystemen und Massenkraft-Ausgleichseinrichtungen versehen. Die elf Horizontalverfahrachsen 66 bzw. 65 erlauben eine Bewegung der Meßtaster 6 sowohl in X- als auch in Y-Richtung. Die Vertikalverfahrachsen 67 bieten die Möglichkeit, daß der Meßtaster 6 in Z-Richtung bewegbar ist. Die gleiche Bewegungsrichtung in der Z-Koordinate erfolgt durch die Vertikalpinole 68. Durch die vier Horizontalausleger 62 sind wiederum Bewegungen des Meßtasters 6 in den beiden Koordinatenrichtungen X bzw. Y gegeben.

Durch dieses System ist jeder Meßtaster 6 in den drei Koordinatenrichtungen X, Y, und Z unabhängig von den übrigen Meßtastern 67 verfahrbar. Die jeweiligen Verfahrachsen 66 und 67 sind in Form von Schienen ausgeführt, welche mit den Ecksäulen 56 verbunden sind.
So bildet jeweils eine vertikale Verfahrachse 67 eine vertikale Verbindung zwischen zwei endseitige Verfahrschienen 66. Auf dieser vertikalen Verbindungsschiene 67 ist die Meßeinrichtung 4 senkrecht verfahrbar und besitzt jeweils einen Horizontalausleger 62 in Form einer Pinole, welche die Meßtaster 6 aufnimmt. Entsprechend dem Beispiel in Fig. 7 können die Meßtaster als Einfach- sowie auch als Mehrfachtaster ausgebildet sein. Die Brücke 65 ist auf den oberen Verfahrachsen verfahrbar in Schienen 66 geführt, die auf den Säulen 56 ruhen. Auf der Brücke 65 ist die Meßeinrichtung 4 in der Y-Richtung bewegbar und weist zudem die Vertikalpinole 68 mit dem Meßtaster 6 auf. Der Meßtisch 2 besitzt den integrierten Drehtisch 3 mit einer Winkelmeßeinrichtung und ist zudem in den Koordinatenrichtungen X und Y bewegbar.

**Patentansprüche**

1.   Flexible CNC-Vielstellenmeßeinrichtung, bestehend aus einer Kombination von Komponenten aus der Koordinatenmeßtechnik, der Vielstellenmeßtechnik und der Formprüftechnik, mit einem Grundrahmen mit selbständigen Meßeinrichtungen (4), wie Ausleger, Taster und Tastsysteme, und einem zugeordneten Geräteleitrechner (9) mit Steuereinheit (10) und Auswerteeinheit (11) für die zentrale Steuerung der Teilsysteme, und mit einer Meßwerterfassung und Meßwertauswertung sowohl durch die Meßsoftware aus der Koordinatenmeßtechnik als auch durch Soll-Ist-Vergleich bestimmter Meßtasterstellungen aus der Vielstellenmeßtechnik, wobei das im Geräteleitrechner (9) integrierte Steuerteil (10) und Auswerteteil (11) über ein Bussystem miteinander und mit einem Meßgeräte-Interface (16), einem Massenspeicher-Interface (12) und einem Peripherie-Interface (17) verbunden sind, und mehrere Prozeßabläufe parallel schaltbar und zu einem einzigen Meßprotokoll zum Zwecke der sofortigen Bewertung aller Meßergebnisse für ein Meßobjekt zusammenfügbar sind.
dadurch gekennzeichnet,
daß vier Säulen (56) vorgesehen sind, die sich in beliebigen, paarweisen Abständen zueinander im Rechteck um einen zentralen Meßtisch (2, 3) gruppieren, an dessen vier sich jeweils gegenüberliegenden Seiten ein Horizontalausleger (62) und zwischen den Säulen (56) Freiräume (63) vorgesehen sind, während über die Säulen (56) eine verfahrbare Brücke angeordnet ist, so daß fünf voneinander unabhängige Meßeinrichtungen (4) mit insgesamt elf Horizontalachsen (66), vier Vertikalverfahrachsen (67), vier Horizontalausleger (62) und einer Vertikalpinole (68) eingerichtet sind, die alle mit einem integrierten Längenmeßsystem und mit Massenausgleichseinrichtungen ausgerüstet sind.

2.   Vielstellenmeßeinrichtung nach Anspruch 1, dadurch gekennzeichnet,
daß das Meßgeräte-Interface (16) ein Bedienpult (19), eine Steuerung (20) für Antriebe (21), eine Anpassung (22, 24) an Meßsysteme (23) und Grenzschalter (25) sowie die Steuerung (26) für Zusatzeinrichtungen (27) aufweist, während das Peripherie-Interface (17) ein Terminal (29), einen Drucker (30), einen Plotter (31) und ein Graphiktablett (32) besitzt und schließlich das Massenspeicher-Interface (12) einen Massenspeicher (33) und die Steuer- und Auswertesoftware, ein CNC-Programm und die jeweiligen Soll-Daten eines Meßobjektes aufweist.

3. Vielstellenmeßeinrichtung nach Anspruch 1,
dadurch gekennzeichnet,
daß jeweils zwischen zwei benachbarten Säulen (56) eine Meßeinrichtung (4) auf zwei parallelen Horizontalverfahrachsen (66) bewegbar ist, welche über einen vertikalen Verbindungsträger eine Vertikalverfahrachse (67) und zusätzlich einen rechtwinklig zur Horizontal- und Vertikalverfahrachse bewegbaren Horizontalausleger (62) besitzt, welcher die Meßtaster (6) zur Antastung des Meßobjektes (5) aufnimmt.

4. Vielstellenmeßeinrichtung nach Anspruch 1,
dadurch gekennzeichnet,
daß die Brücke (65) über den Säulen (56) eine Meßeinrichtung (4) aufweist, die eine Vertikalpinole (68) besitzt und zusammen mit der Brücke (65) in jeweils rechtwinklig zueinander angeordneten Horizontalverfahrachsen (66) bewegbar ist und Meßtaster (6) für die Antastung an ein Meßobjekt (5) aufnimmt.

5. Vielstellenmeßeinrichtung nach den Ansprüchen 1 bis 4,
dadurch gekennzeichnet,
daß alle Koordinatenverfahrachsen CNC-gesteuert sind.

6. Vielstellenmeßeinrichtung nach den Ansprüchen 1 bis 4,
dadurch gekennzeichnet,
daß jede Meßeinrichtung (4) ein eigenes Wechselmagazin (8) und eine Wechseleinrichtung (7) für Tastelemente (6) und Meßköpfe aufweist.

7. Vielstellenmeßeinrichtung nach den Ansprüchen 1 bis 4,
dadurch gekennzeichnet,
daß die Auskragung der seitlichen Ausleger (62) kleiner ist als der Meßbereich in Richtung der Auslegerbewegung, mindestens jedoch dem halben Meßbereich entspricht.

8. Vielstellenmeßeinrichtung nach Anspruch 1,
dadurch gekennzeichnet,
daß ein Drehtisch (3) als Meßtisch (2) um die Horizontalachsen kippbar ist.

9. Vielstellenmeßeinrichtung nach den Ansprüchen 1 bis 6,
dadurch gekennzeichnet,
daß als Längenmeßeinrichtungen wahlweise Laserinterferometer, inkrementale Meßsysteme oder kapazitive Meßstäbe eingesetzt sind.

10. Vielstellenmeßeinrichtung nach den Ansprüchen 1 bis 8,
dadurch gekennzeichnet,
daß in einem großen Drehtisch (3) oder Meßtisch (2) mehrere kleine Drehtische integriert sind.

**Claims**

1. Flexible CNC multi-point measuring apparatus, comprising a combination of components from coordinate measuring technology, multi-point measuring technology and shape testing technology, having a basic frame with independent items of measuring apparatus (4), such as brackets, probes and probing systems, and having an associated device master computer (9) with control unit (10) and evaluation unit (11) for central control of the part systems, and having a measured value detection and a measured value evaluation both by means of the measurement software from coordinate measuring technology and by means of a set/actual comparison of certain measurement probe positions from multi-point measuring technology, the evaluation part (11) and control part (10) integrated in the device master computer (9) being connected by way of a bus system to one another and to a measurement device interface (16), a mass storage interface (12) and a peripheral interface (17), and a plurality of process sequences being switchable in parallel and being connectable to form a single measurement protocol for the purpose of immediate assessment of all the measured results of an object for measurement, characterized in that there are provided four pillars (56) which are grouped around a central measurement table (2, 3) at any spacing in pairs in a rectangle with respect to one another, and on the four sides opposite one another of the measurement table there is provided a horizontal bracket (62) and between the pillars (56) there are provided free spaces (63), while a traversable bridge is arranged above the pillars (56), so that five mutually independent items of measurement apparatus (4) having a total of eleven horizontal axes (66), four vertical traversing axes (67), four horizontal brackets (62) and one vertical sleeve (68) are set up, all of them being equipped with an integrated length measurement system and with mass compensation apparatus.

2. Multi-point measurement apparatus according to Claim 1, characterized in that the measurement device interface (16) has an operating console (19), a control (20) for drives (21), an interface (22, 24) to measurement systems (23) and limit switches (25), and the control (26) for additional items of apparatus (27), while the peripheral interface (17) has a terminal (29), a printer (30), a plotter (31) and a graphics tablet (32), and finally the mass storage interface (12) has a mass store (33) and the control and evaluation software, a CNC program and the respective set data of an object for measurement.

3. Multi-point measurement apparatus according to Claim 1, characterized in that a measurement apparatus (4) is movable between in each case two adjacent pillars (56) on two parallel horizontal traversing axes (66), and has by way of a vertical connection bearer a vertical traversing axis (67) and additionally a horizontal bracket (62) which is movable at right angles to the horizontal and vertical traversing axes and which receives the measurement probes (6) for probing the object (5) for measurement.

4. Multi-point measurement apparatus according to Claim 1, characterized in that the bridge (65) over the pillars (56) has a measurement apparatus (4) which has a vertical sleeve (68) and which, together with the bridge (65), is movable in horizontal traversing axes (66), in each case arranged at right angles to one another, and receives measurement probes (6) for probing an object (5) for measurement.

5. Multi-point measurement apparatus according to Claims 1 to 4, characterized in that all the coordinate traversing axes are CNC-controlled.

6. Multi-point measurement apparatus according to Claims 1 to 4, characterized in that each measurement apparatus (4) has its own changeover magazine (8) and a changeover apparatus (7) for probing elements (6) and measurement heads.

7. Multi-point measurement apparatus according to Claims 1 to 4, characterized in that the bent portion of the lateral brackets (62) is smaller than the measurement region in the direction of bracket movement, but is at least equal to half the measurement region.

8. Multi-point measurement apparatus according to Claim 1, characterized in that as a measurement table (2) a rotary table (3) is tiltable about the horizontal axes.

9. Multi-point measurement apparatus according to Claims 1 to 6, characterized in that laser interferometers, incremental measurement systems or capacitive measurement rods are optionally used as length measurement apparatus.

10. Multi-point measurement apparatus according to Claims 1 to 8, characterized in that a plurality of small rotary tables are integrated in a large rotary table (3) or measurement table (2).

**Revendications**

1. Dispositif de mesure multipoint CNC flexible, constitué d'une combinaison de composants issus de la technique de mesure des coordonnées, de la technique de mesure multipoint et de la technique de contrôle de forme, comportant un cadre de base avec des dispositifs de mesure (4) autonomes, tels que des bras en porte-à-faux, des palpeurs et des systèmes de palpage, ainsi qu'un ordinateur pilote d'appareils (9) associé, avec unité de commande (10) et unité d'exploitation (11), pour la commande centralisée des systèmes partiels, et comportant une saisie et une analyse des valeurs mesurées ainsi que des positions de palpeurs de mesure, relevant de la technique de mesure multipoint, déterminées par le logiciel de mesure de la technique de mesure des coordonnées ainsi que par une comparaison entre les valeurs de consigne et les valeurs réelles, dans lequel la partie de commande 10 et la partie d'exploitation 11, intégrées dans l'ordinateur pilote d'appareils 9, sont connectées entre elles par un système de bus et avec une interface d'instruments de mesure (16), une interface de mémoire de grande capacité (12) et une interface de périphériques (17), et dans lequel plusieurs processus peuvent être commandés en parallèle et réunis en un unique protocole de mesure, en vue de l'interprétation immédiate de tous les résultats de mesure pour un objet de mesure, caractérisé en ce qu'il est prévu quatre montants (56) qui sont regroupés deux par deux, avec des écartements quelconques, pour former un rectangle autour d'une table de mesure centrale (2, 3), sur les quatre côtés de laquelle il est prévu un bras horizontal (62) et des espaces libres (63), entre les montants (56), tandis qu'au dessus des montants (56) est placé un pont mobile, ce qui fait que sont installés cinq dispositifs de mesure (4), indépendants les uns des autres, avec au total onze axes horizontaux (66), quatre axes de déplacement vertical (67), quatre bras horizontaux (62) et un fourreau vertical (68), qui sont tous équipés d'un système de mesure de longueur intégré et de dispositifs de compensation de masse.

2. Dispositif de mesure multipoint selon la revendication 1, caractérisé en ce que l'interface des instruments de mesure (16) comporte un pupitre de commande (19), une commande (20) pour les mécanismes d'entraînement (21), un dispositif d'adaptation (22, 24) à des systèmes de mesure (23) et des interrupteurs de fin de course (25) ainsi que la commande (26) de dispositifs supplémentaires (27), tandis que l'interface des périphériques (17) possède un terminal (29), une imprimante (30), un traceur (31) et une tablette graphique (32) et enfin l'interface de mémoire de grande capacité (12) possède une mémoire de grande capacité (33) et le logiciel de commande et d'exploitation, un programme CNC et les valeurs de consigne respectives d'un objet de la mesure.

3. Dispositif de mesure multipoint selon la revendication 1, caractérisé en ce qu'entre deux montants (56) voisins, un dispositif de mesure (4) est déplaçable sur deux axes de déplacement horizontal (66) parallèles et possède, au-dessus d'une poutre de liaison verticale, un axe de déplacement vertical (67) et en plus un bras horizontal (62), déplaçable perpendiculairement à l'axe horizontal et à l'axe vertical de déplacement, lequel bras loge les palpeurs de mesure (6) destinés à palper l'objet de la mesure (5).

4. Dispositif de mesure multipoint selon la revendication 1, caractérisé en ce que le pont (65) comporte, au-dessus des montants (56), un dispositif de mesure (4) qui possède un fourreau vertical (68) et qui est déplaçable avec le pont (65) dans des axes de déplacement horizontal (66), perpendiculaires les uns aux autres et loge des palpeurs de mesure (6) pour le palpage d'un objet de mesure (5).

5. Dispositif de mesure multipoint selon les revendications 1 à 4, caractérisé en ce que tous les axes de déplacement des coordonnées sont à commande CNC.

6. Dispositif de mesure multipoint selon les revendications 1 à 4, caractérisé en ce que chaque dispositif de mesure (4) possède son propre magasin d'échange (8) et un dispositif d'échange (7) pour des éléments de palpage (6) et des têtes de mesure.

7. Dispositif de mesure multipoint selon les revendications 1 à 4, caractérisé en ce que le porte-à-faux des bras (62) latéraux est inférieur à la zone de mesure en direction du déplacement du bras, mais correspond au moins à la moitié de celle-ci.

8. Dispositif de mesure multipoint selon la revendication 1, caractérisé en ce qu'une table tournante (3) servant de table de mesure (2) peut basculer autour des axes horizontaux.

9. Dispositif de mesure multipoint selon les revendications 1 à 6, caractérisé en ce qu'on utilise comme dispositif de mesure de longueur, au choix des interféromètres à laser, des systèmes de mesure incrémentiels ou des barres de mesure capacitives.

10. Dispositif de mesure multipoint selon les revendications 1 à 8, caractérisé en ce que plusieurs petites tables tournantes sont intégrées dans une grande table tournante (3) ou table de mesure (20).

# FIG.1

Netzwerk zur CAD / CAM - Ankopplung

Geräteleitrechner 9

10 11

Steuereinheit Speicher Auswerteeinh.

13 12 13

13

1

7 4

4 6

8 4

4 7 7

4 6 8

6 6

6

7 3

5 2

4

7 7

8 8 8

FIG.2

**FIG.3**

Meßachse 2 — 34
Meßachse N
34
35 — Tastsystem und Aufnehmer
Meßachse 1
34
Drehtischachse
36

Anpassen
Überlagern — 37

Punktkoordinaten X,Y,Z
Antastrichtung $n_x$, $n_y$, $n_z$

Temperatur —

**Korrekturdaten**

- Tasterabbiegung
- system. Abweichungen
- Temperaturverhalten
- Tastermodus

38 —

Korrigieren — 39

W-Lage-Daten

40

Transformieren
ins W-Lage-System — 41

Speichern

Berechnen
von Ausgleichsformelementen
und Meßunsicherheit

43 —

Punktkoordinator
Meßergebnisse
Trenddaten — 42

Verknüpfen — 44

Meßergebnisse

CAD/CAM —

Sollgeometrie

45

Soll-ist-Vergleich — 46

Prüfergebnis

NC-Maschine
CAD/CAM-Ebene

48

Ausgabe des
Protokolls

47

Statistik
Trendanalyse

49

EP 0 289 983 B1

LAN

Verbindung zur CAD/CAM-Ebene

und zum Leitrechner der Fertigungsinsel

**FIG.4**

EP 0 289 983 B1

FIG.6

Einbauraum für Brücke

Pfeiler

Einbauraum für Ausleger

Meßbereich

X : 1000 mm
Y : 1000 mm
Z : 1200 mm

Einbauraum für Ausleger

Pfeiler

Einbauraum für Meßtisch

Fundamentgestell

FIG.5

Pfeiler

Freiraum

Einbaum für Horizontal-Ausleger

Pfeiler

Einbauraum für Horizontal-Ausleger

Meßfläche

X,Y = 1000mm,1000mm

Einbauraum für Horizontal-Ausleger

Pfeiler

Freiraum

Freiraum

Einbauraum für Horizontal-Ausleger

Freiraum

Pfeiler

13

# FIG.7

# FIG.8

# FIG.9